Europäisches Patentamt

European Patent Office

Office européen des brevets

(11) Publication number: **0 328 796**
**A2**

# EUROPEAN PATENT APPLICATION

(21) Application number: **88202884.8**

(22) Date of filing: **14.12.88**

(51) Int. Cl.⁴: **G05D 1/03**

(30) Priority: **18.12.87 IT 2309387**

(43) Date of publication of application:
**23.08.89 Bulletin 89/34**

(84) Designated Contracting States:
**BE DE ES FR GB**

(71) Applicant: **FATA AUTOMATION S.P.A.**
**Strada Statale 24 - Km. 12**
**I-10044 Pianezza (Torino)(IT)**

(72) Inventor: **Di Rosa, Gaetano**
**Corso Torino 50**
**I-10025 Pino Torinese (Torino)(IT)**

(74) Representative: **Faraggiana, Vittorio, Dr. Ing.**
**Ingg. Guzzi e Ravizza S.r.l. Via Boccaccio, 24**
**I-20123 Milano(IT)**

(54) **System for transmitting information between automatically guided vehicles and ground control systems by means of electromagnetic induction.**

(57) A system for transmitting coded information between an automatically guided vehicle (AGV) of the type that follows a conductor embedded in the flooring and a ground control system. The said system of communication comprises a loop disposed in the flooring in a position along the route followed by the said AGV and an antenna disposed on the lower surface of the said AGV so that communication takes place when the said antenna comes to be on the vertical of the said loop and thus when an inductive connection between them is established.

Fig.1

## SYSTEM FOR TRANSMITTING INFORMATION BETWEEN AUTOMATICALLY GUIDED VEHICLES AND GROUND CONTROL SYSTEMS, BY MEANS OF ELECTROMAGNETIC INDUCTION

Various types of automatically guided vehicles (AGV's) are known which move along pre-set routes following conductor cables embedded in the flooring through the agency of sensors disposed on board the said AGV's to detect the presence of the said conductors. As well as information as to the route to be followed given by the embedded conductors, such AGV's require further information during their operation, such as, for example, information as to where to make stops, what operations to carry out when a given position has been reached, which branch of the embedded cable to follow when a track-switch is encountered en route, etc. It is, moreover, also useful to have a reverse-direction information exchange, i.e. between the AGV and a control systems that supervises the movement of different AGV's in the same environment; an AGV may, for example, need to inform the said system that its batteries are run down, or that owing to an on-board failure it is unable to move and must thus be replaced, etc.

Solutions to the aforesaid problem of communicating additional information are already known - for example solutions employing small magnets recessed in the floor by the side of the AGV guide conductor. These magnets are detected by appropriate sensors on board the different AGV's, and provide precise information, depending on their disposition along the route of the AGV. However, such a system suffers from the serious limitation of not being programmable; the magnets are fixed in the flooring and the only way to vary the message is to dig up the flooring, remove the magnets and replace them with magnets disposed in a new configuration that can be interpreted by the AGV as the new message. A system of this kind is economical for communicating unchangeable information, but is inapplicable whenever a certain degree of flexibility is required in the system. In addition, the communication that is thus effected is not bidirectional but takes place solely in the direction of the AGV, which cannot inform a ground control system of its own condition.

Another known solution to the problem in question is to use a bidirectional serial channel for the information exchange. As such exchange has to take place without physical contact between the AGV and ground, use is made of transducers of the electrical signal containing the serial, optical, inductive or yet other kinds of transmitted information.

This system, already amply experimented, offers the greatest degree of flexibility for the exchange of information, enabling messages, texts, programs, instructions, etc. to be transmitted. However, such system (serial) is considerably sophisticated and thus costly in that it calls for an intelligent processing (interpretation) of the messages transmitted and received.

The overall object of the present invention is to obviate the above-mentioned diasadvantages by embodying a system of communication between AGV's and ground control system that is economical, dependable and flexible in use.

The invention therefore embodies a remote control kind of communication system of the type permitting a bidirectional transmission of codes between an on-board steering system of an AGV that follows a pre-established course marked-out by a conductor cable embedded in the flooring and detected by sensors on the AGV, and a ground control system, wherein there are comprised a plurality of inductive ground loops each connected to a first reception and transmission device connected to the said ground control system and an antenna disposed on the said AGV comprising a second transmission and reception device connected to the said AGV steering system to realize an inductive coupling between a loop of the said plurality of loops and the said antenna when they are at the minimum reciprocal distance.

The object of the invention, and its advantages over the known art, will become more apparent from an examination of the following not limiting description thereof referred to the appended drawings, in which:

- figure 1 is a diagrammatic perspective view of a system employing AGV's and equipped with a transmission system embodied according to the innovative principles of the invention;

- figure 2 is a block diagram showing in principle the different functional units of the present invention.

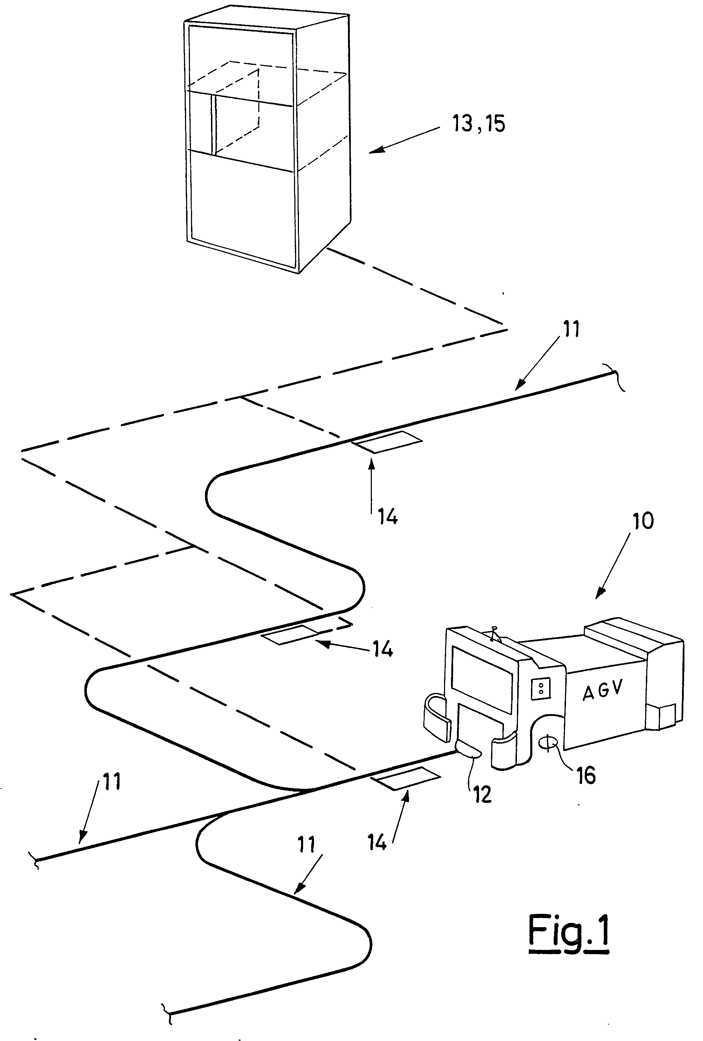

With reference to the figures, a system of AGV's essentially consists of a pluraliry of AGV's of which figure 1 represents diagrammatically an example 10, and of a certain number of conductors 11 embedded in the flooring, such conductors being followed by the said AGV's through the agency of sensors 12 aboard them which detect their position. What has thus far been described refers to the known art.

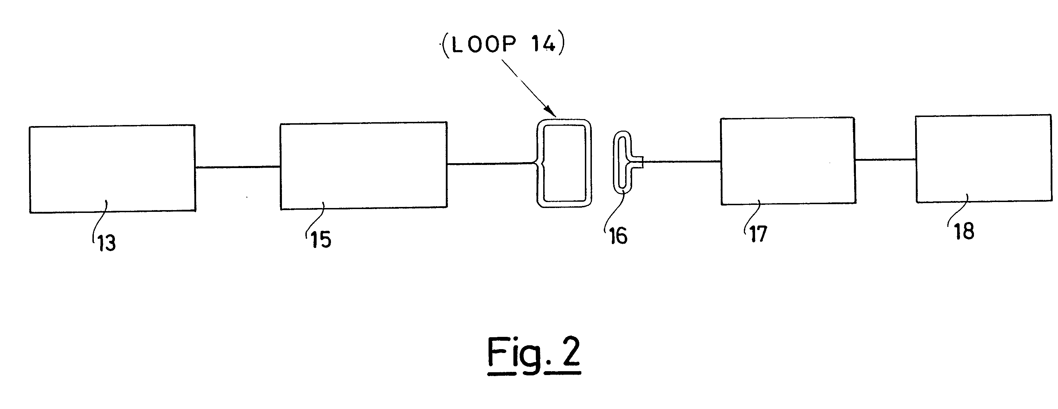

According to the innovative principles of the present invention, at the positions along the conductors 11 at which the information exchanges between the AGV's in transit and a ground control system are wished to take place, there are disposed, again embedded in the flooring and flanking the conductors 11, inductive loops 14 which are for example realized with a certain number of rectangular sectors of conductor wire. The inductive loops 14 are connected to a transmission and reception device 15 connected to the ground control system (shown in a single container in figure 1 and separately in the diagram of figure 2). Each AGV carries a receiving and transmitting antenna 16 consisting of a coil disposed on the lower surface of the AGV and in a position such that, when the AGV passes over one of the said inductive loops 14, the antenna 16 comes to be on its vertical, thus effecting an inductive connection with the loop. As figure 2 shows, the antenna 16 comprises a second reception and transmission device 17 which is in turn connected to the steering system 18 aboard the AGV.

The bidirectional transfer of codes between ground control system and AGV is based on the transmission of a carrier frequency the amplitude of which is modulated by means of a certain number of signals with each of which a particular code or item of information is associated. For example the transmission by the ground control system of a command to an AGV takes place through the sending by the control system 13 to the reception and transmission device 15 of a code to which there has previously been assigned a particular command; the device 15 converts the said code into the modulating signal assigned to it and sends it with the carrier to the loop on which the AGV is required to detect the signal.

When the AGV passes over the loop, the antenna 16 present thereon captures the modulated frequency by electromagnetic induction and the transmission/reception device 17 again converts it into the code thereto assigned and then sends it to the AGV steering system 18 which performs the command associated with it.

Reverse communication, i.e. from an AGV to the ground control system, takes place in a similar manner. The AGV steering system sends the code of the message to be transmitted to ground to the transmission/reception device 17. The device 17 converts the said code into the associated modulated frequency and sends it to the antenna 16. When the AGV passes over the vertical of a loop 14, the said modulated frequency is detected by the reception/transmission device 15 which converts it into the corresponding code and sends it to the ground control system 13 which interprets it and carries out its instructions.

The transmission takes place as the result of modulation of a fairly low carrier frequency with a power sufficiently low to limit its field of reception solely to the vertical position between loop and antenna so as to obviate interference between different loops disposed even at very small distances apart along the flooring on which the AGV's travel.

Although for greater simplicity of exposition the communication between AGV and ground system and the inverse communication from ground system to AGV have been described as separate in time, they can take place simultaneously, i.e. while the AGV transmits codes to the ground system, this latter can transmit codes to the AGV.

As will readily be seen, a transmission system of the kind described above is highly flexible. The number of different transmissible codes is very great, and can be adapted to the particular requirements of the installation of which the AGV system forms part. Tha same loop over which the AGV in transit passes can send AGV codes that are on each occasion different, and therefore the AGV's under the ground control system can be made to behave in different ways. This was not possible, for example, with the system of the known art employing magnets embedded in the flooring, since these magnets represented a single unalterable message in relation to their physical disposition in the flooring.

The particular type of communications technique employing an amplitude-modulated carrier frequency is herein reported solely as an example of application of the innovative principles of the invention, and is not limiting; any other system of the known code transmission/reception art applicable to an inductive coupling transmission can be used, although the herein reported amplitude-modulation type would appear to be is the most satisfactory as regards economy and dependability in use for the intended purposes.

The positions of the loop and antenna described above are likewise herein reported solely by way of example, and can be varied in relation to the particular requirements of the embodiment. Depending on requirements and on the degree of control of the AGV's it is wished to exercise, each loop can moreover be provided with its own transmission/reception device or more loops can be connected to a single transmission/reception device; in addition, such devices can all be connected to a single ground control system, or else several control systems each connected to a set of such devices can be used.

## Claims

1) Remote control communication system of the type permitting a bidirectional communication of codes between a steering system aboard an automatically guided vehicle (AGV) that follows a pre-established route marked out by means of a conductor cable embedded in the flooring and detected by sensors on the AGV, and a ground control system, wherein there are comprised a plurality of inductive ground loops each connected to a first transmission/reception device connected to the said ground control system and an antenna disposed on the said AGV comprising a second transmission/reception device connected to the said steering system to realize an inductive coupling between a loop of the said plurality of loops and the said antenna when they come to be at the minimum reciprocal distance.

2) Remote control communication system as described in claim 1, wherein the said codes are transmitted from the said loop to the said antenna and from the said antenna to the said loop by the emission by the said first transmission/reception device and by the said second transmission/reception device of an amplitude-modulated carrier frequency where a different modulation is associated with each transmissible code.

3) Remote control communication system as described in claim 2, wherein the said emission between the said loop and the said antenna can take place simultaneously with the emission between the said antenna and the said loop.

4) Remote control communication system as described in claim 1, wherein the said inductive loop is disposed in the flooring on which the said AGV travels and proximally to the said conductor cable.

5) Remote control communication system as described in claim 4, wherein the said antenna is disposed on the said AGV proximally to the flooring and in such a position as to be on the vertical of the said loop when the said AGV passes in its vicinity.

EP 0 328 796 A2

13,15

11

14

14

10

AGV

12

16

14

11

11

Fig.1

(LOOP 14)

13  15  16  17  18

EP 0 328 796 A2

Fig.2